# EUROPÄISCHE PATENTSCHRIFT

(11) **EP 2 869 907 B1**
(45) Veröffentlichungstag und Bekanntmachung des Hinweises auf die Patenterteilung: **18.03.2020**
(21) Anmeldenummer: 13739630.5
(22) Anmeldetag: 02.07.2013
(51) Int. Cl.: B01D 53/04, B01D 46/00, B01D 46/02, F23J 15/02

(54) **VERFAHREN ZUR REINIGUNG VON RAUCHGAS UND FILTERANLAGE HIERZU**
METHOD FOR PURIFYING FLUE GAS AND RELATED FILTER UNIT
METHODE POUR PURIFIER DES FUMEES DE COMBUSTION ET INSTALLATION DE FILTRATION CORRESPONDANTE

(30) Priorität: 03.07.2012 DE 102012105936
(43) Veröffentlichungstag der Anmeldung: 13.05.2015
(73) Patentinhaber: TURBOFILTER GMBH, 77933 Lahr (DE)
(72) Erfinder: WALLER, Jürgen, 45879 Gelsenkirchen (DE); BERTLING, Rainer, 40822 Mettmann (DE)
(74) Vertreter: Patentanwälte Walther Hinz Bayer PartGmbB
(86) Internationale Anmeldenummer: PCT/EP2013/063902
(87) Internationale Veröffentlichungsnummer: WO 2014/006027

(56) Entgegenhaltungen:
- EP-A1- 2 177 254
- EP-A2- 0 501 281
- DE-U1-202006 003 674
- DE-U1-202012 003 232
- JP-A- 2007 198 668
- US-A1- 2005 132 880
- US-A1- 2009 320 678

## Beschreibung

Die vorliegende Erfindung betrifft Verfahren zur Reinigung von Rauchgas mit einer Filteranlage, wobei das Rauchgas einem filternden Abscheider zugeführt wird und wobei der filternde Abscheider in einem Gehäuse aufgenommen ist, und das Gehäuse weist vor dem filternden Abscheider eine Vorfilterseite und nach dem filternden Abscheider eine Reinseite auf, wobei vor dem Eintreten des Rauchgases in das Gehäuse ein Adsorbens in das Rauchgas eingedüst wird, sodass der Teil der Schadstoffe vor dem filternden Abscheider durch das Adsorbens adsorbiert und im filternden Abscheider abgeschieden wird.

Niedrigere Grenzwerte von Schadstoffen in Rauchgas, das beispielsweise bei Verbrennungsprozessen in Verbrennungseinrichtungen entsteht, führen zu dem Erfordernis, die Reinigung des Rauchgases weiter zu verbessern. Bekannt sind hierfür Filteranlagen, die einen filternden Abscheider aufweisen, der Bestandteil mehrerer Reinigungsstufen sein kann. Der filternde Abscheider kann beispielsweise ein Gewebefilter sein, der in einem Gehäuse aufgenommen ist und der, beispielsweise nach einer Vorreinigung des Rauchgases, Schadstoffe aus dem Rauchgas filtert. Derartige Gewebefilter können beispielsweise so ausgeführt sein, dass diese in zeitdiskreten Druckstoßrückspülungen abgereinigt werden.

Beim Betrieb von Verbrennungseinrichtungen können Schadstoffe entstehen, die beispielsweise Quecksilber, Dioxine, Furane und weitere Schwermetalle umfassen. Dabei entsteht das Problem, dass in Abhängigkeit der Verbrennungsparameter in der Verbrennungseinrichtung Spitzenmengen derartiger Schadstoffe im Rauchgas entstehen können, die durch bestehende Filteranlagen, insbesondere durch den in einem Gehäuse aufgenommenen, in zeitdiskreten Abständen abzureinigenden filternden Abscheider nicht vollständig zurückgehalten werden können. Somit gelangen die Schadstoffe in die Atmosphäre, was aufgrund aktueller und zukünftiger Bestimmungen sogar zur Stilllegung einer Verbrennungseinrichtung führen kann.

### STAND DER TECHNIK

Aus der DE 37 06 131 A1 ist ein Verfahren zur Reinigung von Rauchgas mit einer Filteranlage bekannt, und es ist angegeben, dass Schadstoffe wie Quecksilber durch Aktivkohle, Koks bzw. alle Arten von Koksprodukten aus Stein- oder Braunkohle und Aktivkokse als adsorbierend wirkende Adsorbentien abgeschieden werden können. Dabei ist vorgesehen, dass das Rauchgas durch eine Mehrzahl von hintereinander geschalteten, vorzugsweise voneinander getrennten Schüttungen von Adsorptionsmitteln geleitet wird.

Aus der DE 43 26 279 A1 ist bekannt, dass als Vorabscheidereinheit Aktivkohle in den Rauchgasstrom eingedüst wird, und die Aktivkohle dient als Adsorbens zur Abscheidung der Schadstoffe im Rauchgas. Die DE 100 34 394 A1 beschreibt ebenfalls ein Eindüsen von Aktivkohle in den Rauchgasstrom, wobei angegeben ist, dass Schwermetalle, insbesondere Quecksilber, mit Aktivkohlen besonders vorteilhaft abgeschieden werden können. Nachteilhafterweise sind jedoch eindüsfähige Kohlen, insbesondere Aktivkohlen, sehr kostenintensiv und die eingedüste Aktivkohle muss mit dem filternden Abscheider bzw. mit dem vom filternden Abscheider abgepulsten Filterkuchen entsorgt werden. Dadurch ergibt sich ein hoher Bedarf an einzudüsender Aktivkohle, die lediglich einfach oder begrenzt rezirkulierbar verwendbar ist und folglich zu einem hohen Verbrauch führt. Ein Verfahren zum Abpulsen von Filterelementen, die einen filternden Abscheider bilden können, die in einem Gehäuse aufgenommen sind und das Gehäuse in eine Vorfilterseite und in eine Reinseite unterteilen, ist aus der DE 1 757 515 bekannt.

Aus Sicherheitsgründen kann überdies die Menge an staubförmiger oder pulverförmiger Aktivkohle nicht beliebig gesteigert werden, da durch einen zu hohen eingedüsten Aktivkohleanteil in Verbindung mit hohen vorherrschenden Temperaturen des Rauchgases eine explosionsfähige Atmosphäre gebildet werden kann. Der filternde Abscheider kann den wesentlichen Teil an Schadstoffen, beispielsweise aber auch von Flugasche, aus dem Rauchgas abscheiden, wobei auch noch auf der Reinseite, die vom filternden Abscheider von der Vorfilterseite abgetrennt ist, Restverunreinigungen und Restschadstoffe, insbesondere Quecksilber, vorkommen können.

Aus der DE 20 2006 003 674 U1 ist eine Aktivkohle bekannt, die als kugelförmige Aktivkohle ausgebildet ist und rieselfähig, abriebfest und staubfrei ist. Zudem zeichnet sich die sogenannte Kugelkohle dadurch aus, dass sie sehr hart ist. Eine solche Kugelkohle bietet zur Restabscheidung von Schadstoffen, die im filternden Abscheider der Filteranlage nicht abgeschieden worden sind, besondere Vorteile, jedoch würde ein Eindüsen dieser Aktivkohle in den Rauchgasstrom zu hohe Kosten verursachen.

Die US 2009/0320678 A1 offenbart ein Verfahren zur Reinigung von Rauchgas mit einer Filteranlage, wobei das Rauchgas einem filternden Abscheider in Form eines Gewebefilters zugeführt wird und wobei der filternde Abscheider in einem Gehäuse aufgenommen ist, und das Gehäuse weist vor dem filternden Abscheider eine Vorfilterseite und nach dem filternden Abscheider eine Reinseite auf. Nachfolgend wird das vorgereinigte Rauchgas einem Adsorbens zugeführt, das hinter dem Gewebefilter angeordnet ist. Damit können Metallkomponenten, insbesondere Quecksilber, aber auch Dioxine und Furan aus dem Rauchgas abgeschieden werden.

Aus der US 2005/0132880 A1 ist ein weiteres Verfahren zur Reinigung von Rauchgas mit einer Filteranlage bekannt, wobei vor der Filteranlage in das Rauchgas ein Adsorbens eingedüst wird. Das Adsorbens wird dabei mittels einer Aktivkohle gebildet. Innerhalb der Filteranlage wird dabei ein weiteres Adsorbens in das Rauchgas eingedüst.

Die EP 2 177 254 A1 offenbart ein Verfahren zur Reinigung von Rauchgas mit einer Filteranlage, die eine in einem Gehäuse ausgenommene Gewebefiltereinheit aufweist, die mit dem Rauchgas durchströmt wird, und das Gehäuse weist vor der Gewebefiltereinheit eine Vorfilterseite und nach dem filternden Abscheider eine Reinseite auf. Vor dem Eintreten des Rauchgases in das Gehäuse wird in das Rauchgas ein Adsorbens eingedüst. Vor dem Gehäuse und noch vor dem Eindüsen des Adsorbens in das Rauchgas durchströmt das Rauchgas eine Vorfiltereinheit. Ein Adsorbens in Anordnung auf der Reinseite nach der Gewebefiltereinheit zur weiteren Abscheidung insbesondere von Quecksilber, Dioxin und/oder Furan ist nicht vorgesehen.

Die JP 2007 198668 A offenbart ein Verfahren und eine Filteranlage, in der Rauchgas einem filternden Abscheider zugeführt wird, der sich in einem Gehäuse befindet, und wobei sich auf der Reinseite noch dem filternden Abscheider eine Aktivkohle- Kassette befindet, die mit dem Rauchgas durchströmt wird, in der Dioxin und andere Schwermetalle abgeschieden werden. Bei der Aktivkohle handelt es sich um sogenannte Granular-Aktivkohle, wobei die Aktivkohle-Kassette als Einheit ausgetauscht werden kann, wenn diese eine entsprechende Zeit im Einsatz war und ein Austausch der Aktivkohle erforderlich ist.

### OFFENBARUNG DER ERFINDUNG

Es ist daher die Aufgabe der vorliegenden Erfindung, ein verbessertes Verfahren zur Reinigung von Rauchgas zu schaffen, insbesondere ergibt sich die Aufgabe, eine Filteranlage zu schaffen, die eine verbesserte Abscheidung von Schadstoffen wie Quecksilber und/oder Dioxin und/oder Furan und/oder weitere Schwermetalle ermöglicht.

Diese Aufgabe wird ausgehend von einem Verfahren gemäß dem Oberbegriff des Anspruches 1 sowie ausgehend von einer Filteranlage gemäß dem Oberbegriff des Anspruches 7 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass auf der Reinseite des Gehäuses ein Filterelement mit einem Adsorbens gebildet durch Aktivkohle aus staubfreier Kugelkohle angeordnet wird, wobei das Filterelement als plan ausgebildete Filterkassette ausgeführt ist, die vom aus dem filternden Abscheider austretenden Rauchgas gleichmäßig über ihrer Fläche durchströmt wird und die in eine Aufnahme auf der Reinseite des Gehäuses einsetzbar und aus dieser auch wieder entnehmbar ist, und dass das Adsorbens im Filterelement mit dem Rauchgas durchströmt wird, wodurch aus dem Rauchgas Schadstoffe aus der Gruppe wenigstens umfassend Quecksilber und/oder Dioxin und/oder Furan und/oder weitere Schwermetalle abgeschieden werden.

Die Erfindung geht von dem Gedanken aus, dass das Gehäuse mit dem in diesem aufgenommenen filternden Abscheider eine separate, baulich getrennte Filtereinheit bildet, in die auf der Reinseite des vorhandenen filternden Abscheiders ein Filterelement mit einem Adsorbens eingebracht wird. Erst durch die Anordnung des nach dem filternden Abscheider angeordneten Filterelementes wird eine zusätzliche Abscheidung von Schadstoffen ermöglicht, die eine Restabscheidung von Schadstoffen bewirkt, sodass nach Durchströmen des nachgeschalteten Filterelementes das Rauchgas auch bei auftretenden Spitzenmengen weitreichend von Schadstoffen gereinigt wird.

Bereits im filternden Abscheider kann eine Vorabscheidung von Schadstoffen aus dem Rauchgas erfolgen, wobei der filternde Abscheider eine Filterwirkung hat, die zwar zur Vorabscheidung der Schadstoffe geeignet ist, jedoch bei Auftreten von Spitzenmengen der Schadstoffe im Rauchgas eine weitreichende Abscheidung der Schadstoffe nicht ermöglicht. Erst durch ein anschließendes Filterelement auf der Reinseite im Gehäuse der Filtereinheit wird gewährleistet, dass auch bei Auftreten von Spitzenmengen der Schadstoffe, beispielsweise von Quecksilber, eine weitreichende Abscheidung der Schadstoffe ermöglicht wird. Zudem wird gewährleistet, dass keine oder nur vermindert Gerüche in die Umgebung abgegeben werden können, wobei auch aus dem Rauchgas entstehende Gerüche durch den filternden Abscheider der Filtereinheit nicht und insbesondere nicht bei Spitzenmengen der Schadstoffe, vollständig abgeschieden werden können.

Die Filtereinheit mit dem filternden Abscheider im Gehäuse und mit dem erfindungsgemäß auf der Reinseite zusätzlich angeordneten Filterelement kann Bestandteil einer gesamten Filtereinheit sein und die Filteranlage kann beispielsweise eine Vorabscheidereinheit aufweisen, mit der ein Teil der Schadstoffe vorabgeschieden wird und/oder wobei ein Teil der Schadstoffe mit dem filternden Abscheider vorabgeschieden werden, sodass durch das Adsorbens des Filterelements restliche Schadstoffe und insbesondere mit Spitzenwerten auftretende Schadstoffmengen aus dem Rauchgas abgeschieden werden. Folglich kann die Filteranlage mit der Vorabscheidereinheit, dem filternden Abscheider im Gehäuse sowie dem erfindungsgemäß angeordneten Filterelement auf der Reinseite im Gehäuse der Filtereinheit wenigstens drei Filterstufen umfassen.

Eine weitere Filterstufe wird erfindungsgemäß gebildet, wenn vor dem filternden Abscheider, damit also insbesondere vor dem Eintreten des Rauchgases in das Gehäuse der Filtereinheit, ein Adsorbens, insbesondere Aktivkohle, Koks, Herdofenkoks, Kalk, Kalkhydrat und/oder Natriumbikarbonat, in das Rauchgas eingedüst wird, sodass ein Teil der Schadstoffe vor dem filternden Abscheider von der Aktivkohle adsorbiert wird, insbesondere wobei die eingedüste Aktivkohle mit den Schadstoffen im filternden Abscheider abgeschieden wird. Folglich kann das eingedüste Adsorbens, beispielsweise gebildet durch Aktivkohle, eine vierte Filterstufe bilden, die insbesondere zwischen einer Vorabscheidereinheit und der Filtereinheit angeordnet ist. Beispielsweise kann dem Rauchgas in den Flugstrom zwischen der Verbrennungseinrichtung oder einer Vorabscheidereinheit und der Filtereinheit das Adsorbens zugegeben werden, sodass auf der Wegstrecke das Rauchgas in Kontakt mit dem Adsorbens gelangt, sodass durch das Adsorbens zumindest ein Teil der Schadstoffe aus dem Rauchgas gebunden werden kann. Das eingedüste Adsorbens kann anschließend vom filternden Abscheider im Gehäuse der Filtereinheit gemeinsam mit den Schadstoffen abgeschieden werden.

Ein besonderer Vorteil ergibt sich ferner dann, wenn das Eindüsen eines Adsorbens, beispielsweise Aktivkohle, in den Flugstrom trotz zumindest zeitweise auftretender Schadstoffmengen im Rauchgas, beispielsweise Quecksilber, nicht mehr erforderlich ist, und das Eindüsen eines Adsorbens in den Flugstrom kann möglicherweise dann unterbleiben, wenn erfindungsgemäß auf der Reinseite des Gehäuses ein Filterelement mit einem Adsorbens angeordnet wird und dass das Adsorbens im Filterelement mit dem Rauchgas durchströmt wird. Der Vorteil ergibt sich daraus, dass bei einer Entsorgung oder Reinigung des filternden Abscheiders keine Aktivkohle mit Schadstoffbesetzung Bestandteil der abgeschiedenen Stoffe ist, da die im filternden Abscheider abgeschiedenen Stoffe im Wesentlichen aus Flugasche des Rauchgases gebildet ist.

Das Adsorbens des Filterelements, das erfindungsgemäß auf der Reinseite des Gehäuses nach dem filternden Abscheider angeordnet wird, kann aus Aktivkohle und insbesondere aus staubfreier Kugelkohle gebildet sein, wobei das Filterelement als vorzugsweise plan ausgebildete Filterkassette ausgeführt ist, die von aus dem filternden Abscheider austretenden Rauchgas im Wesentlichen flächengleichmäßig durchströmt wird. Beispielsweise kann der filternde Abscheider durch Gewebefilter gebildet sein, insbesondere in Form von Filterschläuchen, Filtertaschen oder Filterzellen, wobei die Gewebefilter insbesondere durch zeitdiskrete Druckstoßrückspülungen oder durch Spülluft abgereinigt werden können.

Im Gehäuse der Filtereinheit können zur Bildung des filternden Abscheiders mehrere Gewebefilter zu einem oder mehreren Filterpaketen zusammengefasst angeordnet werden, und die Filterschläuche, die Filtertaschen oder die Filterzellen können von außen nach innen durchströmt werden. Das aus den Gewebefiltern abströmende Rauchgas tritt folglich flächenmäßig aus den Gewebefiltern aus, und bei vorteilhafter Anordnung der Filterkassette, beispielsweise planseitig auf die Abströmseite des oder der Filterpakete, wird bewirkt, dass das Adsorbens des kassettenförmigen Filterelements flächengleichmäßig durchströmt wird. Dabei kann jedem filternden Abscheider, vorzugsweise jedoch jedem Filterpaket aus mehreren einzelnen filternden Abscheidern, beispielsweise jedem Folterpaket aus mehreren Filterschläuchen, eine eigene Filterkassette auf der Reinseite zugeordnet sein. Sind beispielsweise vier, sechs, acht oder mehr Filterpakete im Gehäuse vorhanden, so können ebenfalls vier, sechs, acht oder mehr Filterkassetten auf der Reinseite im Gehäuse vorgesehen sein.

Die dem filternden Abscheider bzw. dem Filterpaket aus einer Vielzahl von filternden Abscheidern zugeordnete Filterkassette kann dabei ein Filterbauvolumen aufweisen, das etwa 1% bis 50%, vorzugsweise 5% bis 20% und besonders bevorzugt 10% des Filterbauvolumens des filternden Abscheiders bzw. des Filterpaketes aus einer Vielzahl von filternden Abscheidern entspricht. Liegt die Filterkassette beispielsweise planseitig auf der Abströmseite des Filterpaketes an, so ergibt sich für das Filterpaket und die Filterkassette eine gleiche Grundabmessung, sodass die Bauhöhe der Filterkassette zur Länge des Filterpaketes ein Verhältnis von etwa 1% bis 50%, vorzugsweise 5% bis 20% und besonders bevorzugt 10% ergibt.

Nach einem weiteren vorteilhaften Ausführungsbeispiel kann der filternde Abscheider im Gehäuse auch durch ein Zyklonfilter oder durch ein Elektrofilter gebildet sein, wobei auch eine Kombination mehrer Filterarten vorgesehen sein kann, die im Gehäuse angeordnet sind und eine Vorfilterseite von einer Reinseite trennen.

Nach einem weiteren Vorteil kann eine Begasungseinheit vorgesehen sein, mit der das Adsorbens des Filterelements mit Druckgas beaufschlagt wird, um im schüttfähigen Material des Adsorbens, insbesondere gebildet durch Aktivkohle, eine Bewegung zu erzeugen, wobei die Begasungseinheit vorzugsweise zwischen dem filternden Abscheider und dem Filterelement angeordnet wird. Die Begasungseinheit kann kontinuierlich oder in Pulsen auf das Adsorbens des Filterelements einwirken, sodass das Adsorbens, beispielsweise korn- oder vorzugsweise kugelförmige Aktivkohle, in kontinuierlicher Bewegung gehalten wird. Das Druckgas kann dabei mit oder gegen den Strom des Rauchgases auf das Filterelement einwirken. Insbesondere kann das Filterelement ein oberes und ein unteres Deckelement aufweisen, und die Deckelemente sind mit einem Abstand zueinander vorzugsweise parallel beabstandet, und die Schüttung des Adsorbens kann eine Beweglichkeit zwischen den Deckelementen besitzen. Somit wird bewirkt, dass das Adsorbens gleichmäßig durch abscheidende Schadstoffe behaftet wird, und es entsteht kein Besetzungsgradient über dem Dickenmaß des durchströmten Filterelements.

Die vorliegende Erfindung richtet sich ferner auf eine Filteranlage zur Reinigung von Rauchgas mit einem filternden Abscheider, wobei der filternde Abscheider in einem Gehäuse aufgenommen ist, und das Gehäuse weist vor dem filternden Abscheider eine Vorfilterseite und nach dem filternden Abscheider eine Reinseite auf, wobei vor dem Eintreten des Rauchgases in das Gehäuse ein Adsorbens in das Rauchgas eindüsbar ist, sodass der Teil der Schadstoffe vor dem filternden Abscheider von dem Adsorbens adsorbierbar und im filternden Abscheider abscheidbar ist. Erfindungsgemäß ist dabei auf der Reinseite des Gehäuses ein Filterelement mit einem Adsorbens gebildet durch Aktivkohle aus staubfreier Kugelkohle angeordnet, wobei das Adsorbens im Filterelement mit dem Rauchgas durchströmt wird, und wobei das Filterelement als plan ausgebildete Filterkassette ausgeführt ist, die in eine Aufnahme auf der Reinseite des Gehäuses einsetzbar und aus dieser auch wieder entnehmbar ist, wobei das Adsorbens im Filterelement mit dem Rauchgas durchströmt wird, wodurch aus dem Rauchgas Schadstoffe aus der Gruppe wenigstens umfassend Quecksilber und/oder Dioxin und/oder Furan und/oder weitere Schwermetalle abscheidbar sind. Die Merkmale und Vorteile des vorstehend beschriebenen Verfahrens finden für die erfindungsgemäße Filteranlage zur Reinigung von Rauchgas ebenfalls Berücksichtigung. Insbesondere kann das Adsorbens aus Aktivkohle, insbesondere aus staubfreier Kugelkohle gemäß DE 20 2006 003 674 U1 gebildet sein.

Der filternde Abscheider kann aus wenigstens einem Gewebefilter, insbesondere aus einem und bevorzugt aus einer Mehrzahl von schlauchförmigen, taschenförmigen oder zellenförmigen Gewebefiltern gebildet sein. Zur Reinigung des filternden Abscheiders kann eine Druckstoßrückspülvorrichtung vorgesehen sein, mit der Gasdruckpulse erzeugbar sind und durch die der oder die Gewebefilter in zeitdiskreten Druckstoßrückspülungen reinigbar ist bzw. sind.

Die Filtereinheit kann so aufgebaut sein, dass die Reinseite von der Vorfilterseite im Gehäuse durch eine Zwischenwand getrennt ist, wobei mehrere Gewebefilter in zumindest einem Filterpaket zusammengefasst oder angrenzend an der Zwischenwand angeordnet sind und eine Durchtrittsfläche in die Reinseite bilden, wobei das Filterelement auf der Reinseite vor der Durchtrittsfläche angeordnet ist. Dabei kann die Durchtrittsfläche kleiner sein als die Querschnittsfläche des Gehäuses, sodass die Zwischenwand als Träger für das oder die Filterpakete dient und verhindert, dass Rauchgas ohne Durchtritt durch die Filterpakete von der Vorfilterseite in die Reinseite gelangt.

Mit weiterem Vorteil kann ein Aufnahmerahmen vorgesehen sein, der die Durchtrittsfläche umschließend ausgeführt ist und in dem das Filterelement aufgenommen ist. Durch den Aufnahmerahmen wird verhindert, dass Rauchgas am Filterelement vorbei in den hinteren Bereich der Reinseite strömen kann, um schließlich die Filtereinheit ohne Durchtritt durch das erfindungsgemäß zusätzlich angeordnete Filterelement auf der Reinseite des Gehäuses zu durchströmen.

Es kann zur nachträglichen Erweiterung bestehender Filteranlagen ein Nachrüstmodul zum Nachrüsten einer Filtereinheit mit einem Gehäuse vorgesehen werden, in welchem ein filternder Abscheider aufgenommen ist, so dass vor dem filternden Abscheider eine Vorfilterseite und nach dem filternden Abscheider eine Reinseite gebildet ist, wobei das Nachrüstmodul ein Filterelement mit einem Adsorbens umfasst, das zur Anordnung auf der Reinseite im Gehäuse ausgebildet ist und wobei das Filterelement zur Abscheidung von Schadstoffen aus der Gruppe wenigstens umfassend Quecksilber und/oder Dioxin und/ oder Furan und/oder weitere Schwermetalle ausgebildet ist. Damit kann das Nachrüstmodul wenigstens aus dem Filterelement, jedoch ferner aus weiteren Elementen bestehen und vorhandene Filtereinheiten mit einem Gehäuse, in dem ein filternder Abscheider aufgenommen ist, kann mit dem Nachrüstmodul derart nachgerüstet werden, dass auf der Reinseite ein Filterelement angeordnet wird. Dabei kann das Filterelement Abmessungen aufweisen, die den Abmessungen des Querschnitts entspricht, der im Gehäuse vom Rauchgas durchströmt und das Nachrüstmodul umfasst beispielsweise einen Aufnahmerahmen für das Filterelement. Insbesondere kann das Filterelement als Filterkassette ausgebildet sein, die in eine Aufnahme auf der Reinseite des Gehäuses einsetzbar und aus dieser auch wieder entnehmbar ist, beispielsweise um das Filterelement auszutauschen.

Auch kann das Nachrüstmodul ein Modulgehäuse aufweisen, das an das Gehäuse der Filtereinheit anordbar ist, so dass die Reinseite im Gehäuse der Filtereinheit durch das Volumen des nachrüstbaren Modulgehäuses erweiterbar ist. Folglich muss das Volumen der Reinseite der Filtereinheit nicht grundsätzlich unverändert bleiben, wenn das erfindungsgemäße Filterelement auf der Reinseite nachträglich angeordnet wird. Beispielsweise kann ein Nachrüstmodul ein eigenes Gehäuse besitzen, das räumlich und damit fluidisch mit der Reinseite verbunden wird, so dass sich das Volumen der Reinseite des Gehäuses der Filtereinheit durch das Volumen des Nachrüstmoduls erweitert. Dabei bildet das Volumen des Nachrüstgehäuses einen erweiterten Teil der Reinseite, und das Modulgehäuse des Nachrüstmoduls kann vom Rauchgas durchströmt werden, wobei das Rauchgas insbesondere über das Modulgehäuse des Nachrüstmoduls schließlich aus dem Gehäuse gelangt, nachdem das Filterelement mit dem Adsorbens durchströmt wurde.

Das Filterelement kann als Filterkassette mit einem oberen und/oder einem unteren Deckelement ausgebildet sein, wobei die Deckelemente ein Teflonmaterial oder ein Metalldrahtsieb umfassen und wobei zwischen den Deckelementen das Adsorbens aufgenommen werden kann. Durch das heiße Rauchgas können in der Filtereinheit und damit auf der Reinseite Temperaturen im Bereich von bis zu 250° C auftreten, so dass zur Bildung der Filterkassette Materialien vorgeschlagen werden, die diesen Temperaturen Stand halten können. Beispielsweise können die Deckelemente aus einem gasdurchlässigen Teflonmaterial oder aus einem Metalldrahtsieb bestehen, das fein genug ist, um die vorzugsweise kugelförmige, staubfreie Aktivkohle zwischen den Deckelementen zu halten, jedoch wird durch das gasdurchlässige Teflonmaterial oder das Metalldrahtsieb ein verlustminimales Durchströmen des Rauchgases durch die Filterkassette ermöglicht.

Die Aktivkohle, die als Adsorbens im Filterelement verwendet werden kann, kann gemäß einem bevorzugten Ausführungsbeispiel aus kugelförmiger Aktivkohle (Kugelkohle) gebildet sein, und die kugelförmige Aktivkohle kann aus 0,01mm bis 20mm, vorzugsweise 0,05mm bis 15mm, bevorzugt 0,1mm bis 10mm, weiter bevorzugt von 0,2mm bis 5mm und am meisten bevorzugt von 0,3mm bis 2,5mm großen vorzugsweise kugelförmigen Aktivkohlepartikeln bestehen. Weiterhin kann die kugelförmige Aktivkohle eine Schwefeldotierung und/oder eine Bromdotierung aufweisen und/oder imprägniert sein und eine Mikroporosität und eine große aktive Oberfläche aufweisen. Vo Die Adsorptionseigenschaften der Aktivkohle in Kugelform kann durch die Imprägnierung beispielsweise mit Katalysatoren wie Enzyme oder Metalle verbessert werden. Beispielsweise kann das Adsorbens auch Bestandteil eines permeablen Sperrschichtverbundes gemäß DE 20 2007 018 046 U1 sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Ansicht einer Filteranlage mit einer Vorabscheidereinheit sowie einer Filtereinheit, in der erfindungsgemäß ein Filterelement eingebracht ist und
- Fig. 2: eine Detailansicht der Filtereinheit mit einem Filterelement, das auf der Reinseite im Gehäuse der Filtereinheit angeordnet ist.

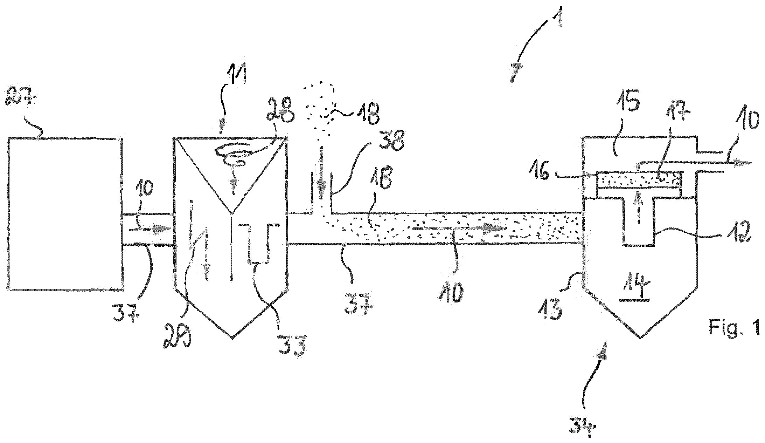

Fig. 1 zeigt eine schematische Ansicht einer Filteranlage 1 zum Reinigen von Rauchgas 10, das beispielsweise aus einer Verbrennungseinrichtung 27 geführt wird, und die Verbrennungseinrichtung 27 kann beispielsweise eine Einrichtung zur Müllverbrennung sein. Über eine Rohrleitung 37 wird das Rauchgas 10 beispielsweise zunächst einer Vorabscheidereinheit 11 zugeführt. Die Vorabscheidereinheit ist beispielhaft als Zyklonabscheider 28, als Elektroabscheider 29 oder als Gewebefilterabscheider 33 gezeigt, wobei eine der Abscheiderbauarten 28, 29 oder 33 die Vorabscheidereinheit 11 bilden kann, jedoch bestehet ferner die Möglichkeit, dass die Vorabscheidereinheit 11 auch aus mehreren der gezeigten Abscheiderbauarten 28, 29 oder 33 gebildet ist. Dabei kann das Rauchgas 10 beispielsweise verschiedene Abscheider 28, 29 oder 33 nacheinander durchströmen. Nach Austritt des Rauchgases 10 aus der Vorabscheidereinheit 11 wird dieses über die Rohrleitung 37 weiter zu einer Filtereinheit 34 geführt, die durch ein Gehäuse 13 gebildet ist, in das das Rauchgas 10 einströmt. Zur weiteren Abscheidung von Schadstoffen aus dem Rauchgas 10 ist in der Rohrleitung 37 zwischen der Vorabscheidereinheit 11 und der Filtereinheit 34 das mögliche Eindüsen eines Adsorbens 18 gezeigt, welches beispielsweise durch Aktivkohle gebildet sein kann. Die Aktivkohle 18 wird dabei über eine Öffnung 38 in der Rohrleitung 37 in das Rauchgas 10 eingedüst, so dass die Aktivkohle 18 mit dem Rauchgas 10 mitbewegt und im Flugstrom gehalten wird. Das eingedüste Adsorbens18 kann aus Aktivkohle 18, jedoch auch aus Koks, Herdofenkoks, Kalk, Kalkhydrat oder auch aus Natriumbikarbonat gebildet sein.

Das Rauchgas 10 gelangt mit dem eingedüsten Adsorbens 18 in das Gehäuse 13 der Filtereinheit 34. Das Gehäuse 13 ist unterteilt in eine Vorfilterseite 14, in die das Rauchgas 10 einströmt und gegebenenfalls neben dem Adsorbens 18 weitere Schadstoffe tragen kann und ein weiterer Teil des Gehäuses 13 ist als Reinseite 15 ausgebildet. Als Trennung zwischen der Vorfilterseite 14 und der Reinseite 15 ist ein filternder Abscheider 12 im Gehäuse 13 angeordnet, der beispielhaft als Gewebefilter 12 ausgeführt ist. Das Rauchgas 10 durchströmt den Gewebefilter 12 und gelangt so von der Vorfilterseite 14 in die Reinseite 15, wodurch weiterer Staub und Schadstoffe sowie das Adsorbens 18 durch den filternden Abscheider 12 zurückgehalten werden.

Auf der Reinseite 15 des Gewebefilters 12 ist schließlich das erfindungsgemäße Filterelement 16 angeordnet und das ein Adsorbens 17 umfasst, das beispielsweise als Schüttung einer kugelförmigen, staubfreien Aktivkohle 17 gebildet ist. Dabei durchströmt das Rauchgas das Filterelement 16 vollständig, bis dieses schließlich über einen Auslass aus der Reinseite 15 das Gehäuse 13 verlässt. Das Filterelement 16 auf der Reinseite 15 des Gehäuses 13 bewirkt ein Restabscheiden von Schadstoffen, die Stoffe aus der Gruppe umfassend wenigstens Quecksilber und/oder Dioxin und/oder Furan und/oder weitere Schwermetalle umfassen kann. Insbesondere dann, wenn durch Vorgänge in der Verbrennungseinrichtung 27 vorübergehend Spitzenmengen von Schadstoffen im Rauchgas 10 vorhanden sind, kann durch die Vorabscheidereinheit 11 das eingedüste Adsorbens 18 und durch den filternden Abscheider 12 der Filtereinheit 34 der hohe Anteil von Schadstoffen nicht vollständig abgeschieden werden. Folglich kommt insbesondere dann das nachgeschaltete Filterelement 16 zum Tragen, wenn im Rauchgas Reste von Schadstoffen vorhanden sind, insbesondere von Quecksilber.

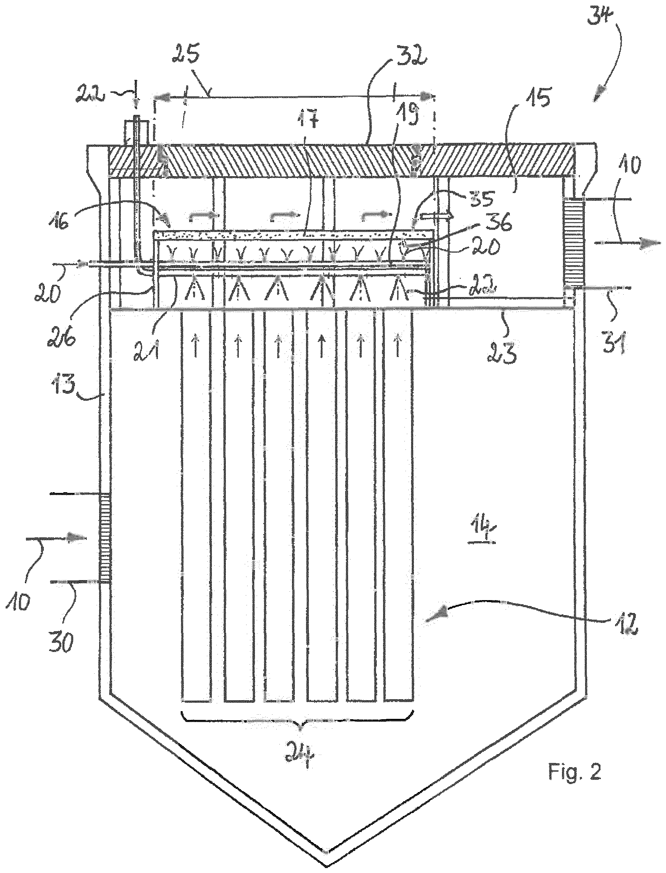

Fig. 2 zeigt eine Detailansicht der Filtereinheit 34 mit einem Gehäuse 13, das einen Eingang 30 aufweist, in den das Rauchgas 10 einströmt. Dabei gelangt das Rauchgas 10 in die Vorfilterseite 14, die durch eine Zwischenwand 23 von einer Reinseite 15 des Gehäuses 13 getrennt ist. Auf der Vorfilterseite 14 befindet sich ein filternder Abscheider 12, der Gewebefilter 12 umfasst, die als Filterschläuche ausgeführt sind. Die Filterschläuche sind parallel zueinander und senkrecht verlaufend ausgerichtet und bilden ein Filterpaket 24, wobei die Filterschläuche der Gewebefilter 12 von außen nach Innen durchströmt werden. Schließlich kann nach Durchströmen des Rauchgases 10 durch die Gewebefilter 12 das Rauchgas 10 durch eine Durchtrittsfläche 25 durch die Zwischenwand 23 hindurchtreten, wobei das gezeigte Filterpaket 24 an der Zwischenwand 23 angeordnet ist. Dabei ist lediglich ein einziges Filterpaket 24 dargestellt, wobei an der Zwischenwand 13 mehrere Filterpakete 24 aus einer Vielzahl von Gewebefiltern 12 angeordnet sein können, die jeweils gleichermaßen vom Rauchgas 10 durchströmt werden. Die Gewebefilter 12 können durch Gasdruckpulse 22 abgereinigt werden, wobei die Gasdruckpulse 22 Druckstoßrückspülungen bilden, die entgegen der Strömungsrichtung des Rauchgases 10 wirken. Die Gasdruckpulse 22 können beispielsweise in zeitdiskreten Abständen aktiviert werden, um den außenseitig an den Gewebefiltern 12 entstehenden Filterkuchen abzureinigen.

Über der Durchtrittsfläche 25 der das Filterpaket 24 bildenden Gewebefilter 12 ist erfindungsgemäß ein Filterelement 16 angeordnet, das als Filterkassette 16 ausgeführt ist und das in einem Aufnahmerahmen 26 aufgenommen ist. Der Aufnahmerahmen 26 verschließt den Seitenbereich zwischen der Zwischenwand 23 und der Filterkassette 16, so dass das Rauchgas 10 nach Durchtritt durch die Gewebefilter 12 das Filterelement 16 vollständig durchströmt. Anschließend gelangt das Rauchgas 10 nach Durchtritt durch das Filterelement 16 aus der Reinseite 15 des Gehäuses 13 durch einen Ausgang 31 aus dem Gehäuse 13 heraus und gegebenenfalls in nachgeschaltete Anlagenteile.

Die Filterkassette 16 ist plan ausgeführt und parallel zur Zwischenwand 23 ausgerichtet und durch den Aufnahmerahmen 26 gehalten. Die Filterkassette 16 weist ein oberes Deckelement 35 und ein unteres Deckelement 36 auf und zwischen den Deckelementen 35 und 36 ist ein Adsorbens 17 aufgenommen, das durch Aktivkohle 17 gebildet ist. Dabei kann die Schüttung des Adsorbens 17 so ausgeführt sein, dass dieses sich zwischen den Deckelementen 35 und 36 bewegen kann. Um die Bewegung zu erzeugen, ist ein Druckgas 20 vorgesehen, das die Filterkassette 16 etwa flächengleichmäßig anströmen kann, so dass das Adsorbens 17 zwischen den Deckelementen 35 und 36 bewegt wird. Beispielsweise kann die Bewegung durch das eingedüste Druckgas 20 und die entgegenwirkende Schwerkraft des Adsorbens 17 bewirkt werden, sodass die Strömungskraft des Druckgases 20 gegen die Schwerkraft des Adsorbens 17 wirkt. Folglich kann eine gleichmäßige Besetzung des Adsorbens 17 in der Filterkassette 16 mit Schadstoffen bewirkt werden, ohne dass sich ein Besetzungsgradient von der unteren Deckschicht 36 zur oberen Deckschicht 35 im Adsorbens 17 bildet.

Um eine Wechselbarkeit der Filterkassette 16 zu schaffen, weist der obere Bereich des Gehäuses 13 ein entnehmbares Deckelelement 32 auf und wird das Deckelelement 32 entnommen, kann durch eine gebildete Öffnung im Gehäuse 13 die Filterkassette 16 aus dem Aufnahmerahmen 26 entnommen und beispielsweise durch eine neue Filterkassette 16 ersetzt werden. Insbesondere kann die Filtereinheit 34 durch das entnehmbare Deckelelement 32 so modifiziert werden, dass das Filterelement 16 als Bestandteil eines Nachrüstmoduls zum Nachrüsten der Filtereinheit 34 ausgebildet werden kann. Beispielsweise kann eine bestehende Filteranlage 1 mit einer Filtereinheit 34 mit einem Filterelement 16 auf der Reinseite 15 der Filtereinheit 34 nachgerüstet werden, um Schadstoffe, insbesondere Quecksilber, im Rauchgas 10 einer Verbrennungseinrichtung 27 abzuscheiden. Damit kann der Einsatz eines Filterelementes 16 auf der Reinseite 15 des Gehäuses 13 das Eindüsen eines Adsorbens 18 in das Rauchgas 10 vor dem Eintritt des Rauchgases 10 in das Gehäuse 13 ersetzen.

Die Erfindung beschränkt sich in Ihrer Ausführung nicht auf das vorstehend angegebene lediglich bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein. Insbesondere kann die erfindungsgemäße Anordnung eines Filterelementes 16 nach einem filternden Abscheider 12 in einem Gehäuse 13 auch ein eigenes Gehäuse aufweisen, und wenn das Rauchgas 10 aus der Reinseite 15 des gezeigten Gehäuses 13 herausströmt und sich ein weiteres Gehäuse anschließt, so wird dieses weitere Gehäuse ebenfalls eine Reinseite 15 des filternden Abscheiders 12 bilden. Die direkte Anordnung eines Filterelementes 16 mit einem Adsorbens 17 auf der Reinseite 15 des Gehäuses 13, in dem der filternde Abscheider 12 angeordnet ist, bildet somit lediglich ein bevorzugtes Ausführungsbeispiel.

### Bezugszeichenliste

- 1: Filteranlage
- 10: Rauchgas
- 11: Vorabscheidereinheit
- 12: filternder Abscheider, Gewebefilter
- 12a: Filterschlauch
- 13: Gehäuse
- 14: Vorfilterseite
- 15: Reinseite
- 16: Filterelement, Filterkassette
- 17: Adsorbens, Kugelkohle
- 18: Adsorbens, Aktivkohle
- 19: Begasungseinheit
- 20: Druckgas
- 21: Druckstoßrückspülvorrichtung
- 22: Gasdruckpuls
- 23: Zwischenwand
- 24: Filterpaket
- 25: Durchtrittsfläche
- 26: Aufnahmerahmen
- 27: Verbrennungseinrichtung
- 28: Zyklonabscheider
- 29: Elektroabscheider
- 30: Eingang Gehäuse
- 31: Ausgang Gehäuse
- 32: entnehmbares Deckelelement
- 33: Gewebefilterabscheider
- 34: Filtereinheit
- 35: oberes Deckelement
- 36: unteres Deckelement
- 37: Rohrleitung
- 38: Öffnung

## Patentansprüche

1. Verfahren zur Reinigung von Rauchgas (10) mit einer Filteranlage (1), wobei das Rauchgas (10) einem filternden Abscheider (12) zugeführt wird und wobei der filternde Abscheider (12) in einem Gehäuse (13) aufgenommen ist, und das Gehäuse (13) weist vor dem filternden Abscheider (12) eine Vorfilterseite (14) und nach dem filternden Abscheider (12) eine Reinseite (15) auf, wobei vor dem Eintreten des Rauchgases (10) in das Gehäuse (13) ein Adsorbens (18) in das Rauchgas (10) eingedüst wird, sodass der Teil der Schadstoffe vor dem filternden Abscheider (12) durch das Adsorbens (18) adsorbiert und im filternden Abscheider (12) abgeschieden wird,
**dadurch gekennzeichnet, dass** auf der Reinseite (15) des Gehäuses (13) ein Filterelement (16) mit einem Adsorbens (17) gebildet durch Aktivkohle (17) aus staubfreier Kugelkohle angeordnet wird, wobei das Filterelement (16) als plan ausgebildete Filterkassette (16) ausgeführt ist, die vom aus dem filternden Abscheider (12) austretenden Rauchgas (10) gleichmäßig über ihrer Fläche durchströmt wird und die in eine Aufnahme auf der Reinseite (15) des Gehäuses (13) einsetzbar und aus dieser auch wieder entnehmbar ist, und dass das Adsorbens (17) im Filterelement (16) mit dem Rauchgas (10) durchströmt wird, wodurch aus dem Rauchgas (10) Schadstoffe aus der Gruppe wenigstens umfassend Quecksilber und/oder Dioxin und/oder Furan und/oder weitere Schwermetalle abgeschieden werden.

2. Verfahren nach Anspruch 1, **dadurch gekennzeichnet, dass** eine außerhalb des Gehäuses (13) angeordnete Vorabscheidereinheit (11) vorgesehen ist, mit der ein Teil der Schadstoffe vorabgeschieden werden und/oder wobei ein Teil der Schadstoffe mit dem filternden Abscheider (12) vorabgeschieden werden, sodass durch das Adsorbens (17) des Filterelementes (16) restliche Schadstoffe und insbesondere mit Spitzenwerten auftretende Schadstoffmengen aus dem Rauchgas (10) abgeschieden werden.

3. Verfahren nach Anspruch 1 oder 2, **dadurch gekennzeichnet, dass** das vor dem Eintreten des Rauchgases (10) in das Gehäuse (13) in das Rauchgas (10) eingedüste Adsorbens (18) durch Aktivkohle (18), Koks, Herdofenkoks, Kalk, Kalkhydrat und/oder Natriumbikarbonat gebildet wird.

4. Verfahren nach einem der vorgenannten Ansprüche, **dadurch gekennzeichnet, dass** der filternde Abscheider (12) durch wenigstens einen Gewebefilter (12) gebildet ist, insbesondere in Form von Filterschläuchen (12a), Filtertaschen oder Filterzellen, wobei der Gewebefilter (12) insbesondere durch zeitdiskrete Druckstoßrückspülungen oder durch Spülluft abgereinigt wird.

5. Verfahren nach einem der vorgenannten Ansprüche, **dadurch gekennzeichnet, dass** eine Begasungseinheit (19) vorgesehen ist, mit der das Adsorbens (17) des Filterelementes (16) mit Druckgas (20) beaufschlagt wird, um im Material des Adsorbens (17), insbesondere gebildet durch Aktivkohle, eine Bewegung zu erzeugen, wobei die Begasungseinheit (19) vorzugsweise zwischen dem filternden Abscheider (12) und dem Filterelement (16) angeordnet wird.

6. Filteranlage (1) zur Reinigung von Rauchgas (10) mit einem filternden Abscheider (12), wobei der filternde Abscheider (12) in einem Gehäuse (13) aufgenommen ist, und das Gehäuse (13) weist vor dem filternden Abscheider (12) eine Vorfilterseite (14) und nach dem filternden Abscheider (12) eine Reinseite (15) auf, wobei vor dem Eintreten des Rauchgases (10) in das Gehäuse (13) ein Adsorbens (18) in das Rauchgas (10) eindüsbar ist, sodass der Teil der Schadstoffe vor dem filternden Abscheider (12) von dem Adsorbens (18) adsorbierbar und im filternden Abscheider (12) abscheidbar ist,
**dadurch gekennzeichnet, dass** auf der Reinseite (15) des Gehäuses (13) ein Filterelement (16) mit einem Adsorbens (17) gebildet durch Aktivkohle (17) aus staubfreier Kugelkohle angeordnet ist, wobei das Filterelement (16) als plan ausgebildete Filterkassette (16) ausgeführt ist, die in eine Aufnahme auf der Reinseite (15) des Gehäuses (13) einsetzbar und aus dieser auch wieder entnehmbar ist, wobei das Adsorbens (17) im Filterelement (16) mit dem Rauchgas (10) durchströmt wird, wodurch aus dem Rauchgas (10) Schadstoffe aus der Gruppe wenigstens umfassend Quecksilber und/oder Dioxin und/oder Furan und/oder weitere Schwermetalle abscheidbar sind.

7. Filteranlage (1) nach Anspruch 6, **dadurch gekennzeichnet, dass** das Adsorbens (18) aus Aktivkohle (18), insbesondere aus staubfreier Kugelkohle, Koks, Herdofenkoks, Kalk, Kalkhydrat und/oder Natriumbikarbonat, gebildet ist.

8. Filteranlage (1) nach Anspruch 6 oder 7, **dadurch gekennzeichnet, dass** der filternde Abscheider (12) aus wenigstens einem Gewebefilter (12), insbesondere aus einem und bevorzugt aus einer Mehrzahl von schlauchförmigen, taschenförmigen oder zellenförmigen Gewebefiltern (12) gebildet ist.

9. Filteranlage (1) nach einem der Ansprüche 6 bis 8, **dadurch gekennzeichnet, dass** eine Spülvorrichtung, insbesondere eine Druckstoßrückspülvorrichtung (21), vorgesehen ist, mit der Gasdruckpulse (22) erzeugbar sind und durch die der oder die Gewebefilter (12) in zeitdiskreten Druckstoßrückspülungen reinigbar ist bzw. sind.

10. Filteranlage (1) nach einem der Ansprüche 8 oder 9, **dadurch gekennzeichnet, dass** die Reinseite (15) von der Vorfilterseite (14) des Gehäuses (13) durch eine Zwischenwand (23) getrennt ist, wobei mehrere Gewebefilter (12) in zumindest einem Filterpaket (24) zusammengefasst an oder angrenzend an der Zwischenwand (23) angeordnet sind und eine Durchtrittsfläche (25) in die Reinseite (15) bilden, wobei das Filterelement (16) auf der Reinseite (15) vor der Durchtrittsfläche (25) angeordnet ist.

11. Filteranlage (1) nach einem der Ansprüche 8 bis 10, **dadurch gekennzeichnet, dass** ein Aufnahmerahmen (26) vorgesehen ist, der die Durchtrittsfläche (25) umschließend ausgeführt ist und in dem das Filterelement (16) aufgenommen ist.

## Claims

1. A method for cleaning flue gas (10) by means of a filter unit (1), wherein the flue gas (10) is supplied to a filtering separator (12), and wherein the filtering separator (12) is received in a housing (13), and the housing (13) comprises a pre-filter side (14) before the filtering separator (12) and a clean side (15) after the filtering separator (12), wherein prior to entrance of the flue gas (10) into the housing (13) an adsorbent (18) is injected into the flue gas (10), so that the part of the harmful substances before passing the filtering separator (12) is adsorbed by the adsorbent (18) and separated in the filtering separator (12),
**characterised in that** on the clean side (15) of the housing (13) a filter element (16) with an adsorbent (17) formed from activated carbon made from dust-free spherical carbon (17) is arranged, wherein the filter element (16) is configured as a flat filter cartridge (16) through which flue gas (10) exiting the filtering separator (12) flows evenly across its surface, and which can be inserted into and removed from a reception on the clean side (15) of the housing (13), and that the flue gas (10) flows through the adsorbent (17) in the filter element (16), whereby harmful substances from the group at least comprising mercury and/or dioxin and/or furan and/or further heavy metals are separated from the flue gas (10).

2. The method according to claim 1, **characterised in that** a pre-separator unit (11) arranged outside the housing (13) is provided by means of which part of the harmful substances is preseparated and/or wherein part of the harmful substances is preseparated by means of the filtering separator (12), so that by the adsorbent (17) of the filter element (16) remaining harmful substances and in particular harmful substance quantities occurring with peak values are separated from the flue gas (10).

3. The method according to claim 1 or 2, **characterised in that** the adsorbent (18) injected into the flue gas (10) prior to entrance of the flue gas (10) into the housing (13) is formed from activated carbon (18), coke, hearth furnace coke, limestone, lime hydrate and/or sodium bicarbonate.

4. The method according to any one of the preceding claims, **characterised in that** the filtering separator (12) is formed from at least one fabric filter (12), in particular in the form of filter tubes (12a), filter bags or filter cells, wherein the fabric filter (12) is cleaned in particular by time-discrete pressure surge backflushes or by purge air.

5. The method according to any one of the preceding claims, **characterised in that** a gassing unit (19) is provided by means of which the adsorbent (17) of the filter element (16) is pressurised with compressed gas (20) in order to generate a movement in the material of the adsorbent (17), in particular formed from activated carbon, wherein the gassing unit (19) is preferably arranged between the filtering separator (12) and the filter element (16).

6. Filter unit (1) for cleaning flue gas (10) with a filtering separator (12), wherein the filtering separator (12) is received in a housing (13), and the housing (13) comprises a pre-filter side (14) before the filtering separator (12) and a clean side (15) after the filtering separator (12), wherein prior to entrance of the flue gas (10) into the housing (13) an adsorbent (18) can be injected into the flue gas (10), so that the part of the harmful substances before passing the filtering separator (12) can be adsorbed by the adsorbent (18) and can be separated in the filtering separator (12),
**characterised in that** on the clean side (15) of the housing (13) a filter element (16) with an adsorbent (17) formed from activated carbon made from dust-free spherical carbon (17) is arranged, wherein the filter element (16) is configured as a flat filter cartridge (16), which can be inserted into and removed from a reception on the clean side (15) of the housing (13), wherein the flue gas (10) flows through the adsorbent (17) in the filter element (16), whereby harmful substances from the group at least comprising mercury and/or dioxin and/or furan and/or further heavy metals can be separated from the flue gas (10).

7. The filter unit (1) according to claim 6, **characterised in that** the adsorbent (18) is formed from activated carbon (18), in particular from dust-free spherical carbon, coke, hearth furnace coke, limestone, lime hydrate and/or sodium bicarbonate.

8. The filter unit (1) according to claim 6 or 7, **characterised in that** the filtering separator (12) is formed from at least a fabric filter (12), in particular from one and preferably from a plurality of tubular, bag-like or cellular fabric filter(s) (12).

9. The filter unit (1) according to any one of claims 6 to 8, **characterised in that** a flushing device, in particular a pressure surge backflush device (21) is provided, by means of which gas pressure pulses (22) can be generated, and by means of which the one or the fabric filter(s) (12) can be cleaned in time-discrete pressure surge backflushes.

10. The filter unit (1) according to any one of claims 8 or 9, **characterised in** the clean side (15) is separated from the pre-filter side (14) of the housing (13) by a partition wall (23), wherein several fabric filters (12) combined in at least one filter package (24) are arranged on or adjacent to the partition wall (23), and form a penetration surface (25) into the clean side (15), wherein the filter element (16) is arranged on the clean side (15) before the penetration surface (25).

11. The filter unit (1) according to any one of claims 8 to 10, **characterised in that** a holding frame (26) is provided configured to surround the penetration surface (25), and in which the filter element (16) is received.

## Revendications

1. Procédé d'épuration de gaz de fumées (10) avec une installation de filtration (1), le gaz de fumées (10) étant amené à un séparateur filtrant (12) et le séparateur filtrant (12) étant logé dans un boîtier (13) et le boîtier (13) comportant un côté de préfiltration (14) en amont du séparateur filtrant (12) et un côté épuré (15) en aval du séparateur filtrant (12), avant l'entrée du gaz de fumées (10) dans le boîtier (13) un
agent adsorbant (18) étant injecté dans le gaz de fumées (10) de sorte que la partie des substances nocives avant le passage du séparateur filtrant (12) est adsorbée par l'agent adsorbant (18) et est séparée dans le séparateur filtrant (12),
**caractérisé en ce que** sur le côté épuré (15) du boîtier (13) un élément filtrant (16) avec un agent adsorbant (17) formé du charbon actif à partir de carbone sphérique (17) exempt de poussière est disposé, l'élément filtrant (16) étant réalisé comme cartouche filtrante plane (16) qui est traversée de manière uniforme sur toute sa surface par du gaz de fumées (10) sortant du séparateur filtrant (12), et qui peut être insérée dans et enlevée d'un logement sur le côté épuré (15) du boîtier (13), et que l'agent adsorbant (17) dans l'élément filtrant (16) est traversé par le gaz de fumées (10), ce qui a pour effet de séparer du gaz de fumées (10) des substances nocives du groupe comprenant au moins le mercure et/ou la dioxine et/ou le furane et/ou d'autres métaux lourds.

2. Procédé selon la revendication 1, **caractérisé en ce qu'**une unité de préséparateur (11) disposée en dehors du boîtier (13) est prévue avec laquelle une partie des substances nocives est préséparée, et/ou une partie des substances nocives est préséparée avec le séparateur filtrant (12) de sorte que par l'agent adsorbant (17) de l'élément filtrant (16) des substances nocives restantes et surtout des quantités de substances nocives se produisant avec des valeurs maximales sont séparées du gaz de fumées (10).

3. Procédé selon la revendication 1 ou 2, **caractérisé en ce que** l'agent adsorbant (18) injecté dans le gaz de fumées (10) avant l'entrée du gaz de fumées (10) dans le boîtier (13) est formé du charbon actif (18), du coke, du charbon à four Martin, de la chaux, de la chaux hydratée et/ou du bicarbonate de sodium.

4. Procédé selon l'une quelconque des revendications précédentes, **caractérisé en ce que** le séparateur filtrant (12) est formé d'au moins un filtre en tissu (12), surtout sous forme des tubes filtrants (12a), des poches filtrantes ou des cellules filtrantes, le filtre en tissu (12) étant épuré surtout par des rétrolavages à impulsion de pression à temps discret ou par l'air de purge.

5. Procédé selon l'une quelconque des revendications précédentes, **caractérisé en ce qu'**une unité de gazage (19) est prévue avec laquelle l'agent adsorbant (17) de l'élément filtrant (16) est pressurisé avec du gaz comprimé (20) pour créer un mouvement dans le matériau de l'agent adsorbant (17), surtout formé du charbon actif, l'unité de gazage (19) étant disposée de préférence entre le séparateur filtrant (12) et l'élément filtrant (16).

6. Installation de filtration (1) pour l'épuration de gaz de fumées (10) avec un séparateur filtrant (12), le séparateur filtrant (12) étant logé dans un boîtier (13), et le boîtier (13) comportant un côté de préfiltration (14) en amont du séparateur filtrant (12) et un côté épuré (15) en aval du séparateur filtrant (12), avant l'entrée du gaz de fumées (10) dans le boîtier (13) un agent adsorbant (18) pouvant être injecté dans le gaz de fumées (10) de sorte que la partie des substances nocives avant le passage du séparateur filtrant (12) peut être adsorbée par l'agent adsorbant (18) et peut être séparée dans le séparateur filtrant (12),
**caractérisé en ce que** sur le côté épuré (15) du boîtier (13) un élément filtrant (16) avec un agent adsorbant (17) formé du charbon actif à partir de carbone sphérique (17) exempt de poussière est disposé, l'élément filtrant (16) étant réalisé comme cartouche filtrante plane (16) qui peut être insérée dans et enlevée d'un logement sur le côté épuré (15) du boîtier (13), l'agent adsorbant (17) dans l'élément filtrant (16) étant traversé par le gaz de fumées (10), ce qui a pour effet de pouvoir séparer du gaz de fumées (10) des substances nocives du groupe comprenant au moins le mercure et/ou la dioxine et/ou le furane et/ou d'autres métaux lourds.

7. Installation de filtration (1) selon la revendication 6, **caractérisé en ce que** l'agent adsorbant (18) est formé du charbon actif (18), surtout à partir de carbone sphérique exempt de poussière, du coke, du charbon à four Martin, de la chaux, de la chaux hydratée et/ou du bicarbonate de sodium.

8. Installation de filtration (1) selon la revendication 6 ou 7, **caractérisé en ce que** le séparateur filtrant (12) est formé d'au moins un filtre en tissu (12), et surtout d'un ou de préférence d'une pluralité de filtre(s) en tissu (12) de forme tubulaire, en forme de poche ou de forme cellulaire.

9. Installation de filtration (1) selon l'une quelconque des revendications 6 à 8, **caractérisé en ce qu'**un dispositif de lavage, surtout un dispositif de rétrolavage à impulsion de pression (21) est prévu, avec lequel on peut générer des impulsions de pression de gaz (22) et par lequel on peut épurer le ou les filtre(s) en tissu (12) en rétrolavages à impulsion de pression à temps discret.

10. Installation de filtration (1) selon l'une quelconque des revendications 8 ou 9, **caractérisé en ce que** le côté épuré (15) est séparé du côté de préfiltration (14) du boîtier (13) par une paroi intermédiaire (23), plusieurs filtres en tissu (12) regroupé au moins en un bloc filtrant (24) étant disposés à la paroi intermédiaire ou adjacents à la paroi intermédiaire (23), et formant une surface de passage (25) dans le côté épuré (15), l'élément filtrant (16) étant disposé sur le côté épuré (15) en amont de la surface de passage (25).

11. Installation de filtration (1) selon l'une quelconque des revendications 8 à 10, **caractérisé en ce qu'**un cadre de réception (26) est prévu qui est réalisé en entourant la surface de passage (25) et dans lequel l'élément filtrant (16) est reçu.
